# EUROPÄISCHE PATENTSCHRIFT

(11) **EP 2 403 723 B1**
(45) Veröffentlichungstag und Bekanntmachung des Hinweises auf die Patenterteilung: **07.11.2012**
(21) Anmeldenummer: 09760857.4
(22) Anmeldetag: 26.11.2009
(51) Int. Cl.: B60C 11/03, B60C 11/04, B60C 19/00

(54) **FAHRZEUGLUFTREIFEN**
PNEUMATIC TIRE FOR VEHICLES
PNEUMATIQUES DE VÉHICULE

(30) Priorität: 04.03.2009 DE 102009003565
(43) Veröffentlichungstag der Anmeldung: 11.01.2012
(73) Patentinhaber: Continental Reifen Deutschland GmbH, 30165 Hannover (DE)
(72) Erfinder: FISCHER, Markus, 30823 Garbsen (DE); RITTWEGER, Stefan, 30163 Hannover (DE); DE KINKELIN, Gary, 30175 Hannover (DE); LIN, Cheng-Kuo, 30163 Hannover (DE); MAGGIORA, Alberto, 60322 Frankfurt/Main (DE)
(74) Vertreter: Finger, Karsten
(86) Internationale Anmeldenummer: PCT/EP2009/065864
(87) Internationale Veröffentlichungsnummer: WO 2010/099839

(56) Entgegenhaltungen:
- EP-A- 2 072 288
- JP-A- 10 029 409
- JP-A- 2001 121 923
- JP-A- 2001 287 510

## Beschreibung

Die Erfindung betrifft einen Fahrzeugluftreifen -insbesondere für PKW - mit einem asymmetrischen Laufstreifenprofil mit einer zur Fahrzeugaußenseite weisenden Außenschulter und mit einer zur Fahrzeuginnenseite weisenden Innenschulter und mit wenigstens einer über den Umfang des Fahrzeugluftreifens erstreckten Umfangsrippe, die in axialer Richtung A des Fahrzeugluftreifens jeweils durch eine Umfangsrille begrenzt ist, wobei die Umfangsrippe nach radial außen mit einer die Straßenkontaktfläche bildenden Mantelfläche und in beiden axialen Richtungen jeweils mit einer eine Rillenwand der angrenzenden Umfangsrille bildenden Rippenflanke begrenzt ist, wobei die beiden Rippenflanken jeweils mit einem ersten radial inneren und aus einem zweiten radial äußeren radialen Erstreckungsbereich ausgebildet sind, von denen sich jeweils der radial innere erste Erstreckungsbereich aus dem Rillengrund nach radial außen bis zum zweiten radial äußeren Erstreckungsbereich und der zweite radial äußere Erstreckungsbereich von dem ersten radial inneren Erstreckungsbereich nach radial außen bis zu der die Umfangsrippe nach radial außen begrenzenden, die Straßenkontaktfläche bildenden Mantelfläche erstrecken.

Derartige Fahrzeugluftreifen mit Fahrzeugseitengebundenem, asymmetrischem Laufstreifenprofil sind bekannt. Beim Fahren von Kurven sind die kurvenaußenseitig montierten Fahrzeugreifen durch Zentrifugal- und Reibkräfte besonders stark durch beansprucht und übertragen einen überwiegenden Teil der Seitenführungskräfte. Zur sicheren Seitenführung auf trockener und auf nasser Oberfläche auch bei hohen Geschwindigkeiten ist es wichtig einen großflächigen sicheren Reibkontakt zwischen der die Straßenkontaktfläche bildenden Oberfläche des Laufstreifenprofils und Straßenoberfläche zu erzielen und gleichzeitig bei nasser Straßenoberfläche ein großes Aufnahmevolumen zur Aufnahme von Wasser zu gewährleisten. Die Umfangsrippen dieser kurvenaußenseitig montierten Fahrzeugreifen werden durch die hohen auf das Fahrzeug wirkenden Zentrifugalkräfte und die im Bereich der Straßenkontaktoberfläche entgegenwirkenden Reibkräfte stark um ihre in Umfangsrichtung verlaufende Längsrichtung gebogen und deformiert, so dass die radial äußere zur Kurvenaußenseite weisende zwischen Rippenwand und Rippenmantelfläche gebildete Kante regelrecht einrollt, wodurch ein Teil der die Straßenkontaktoberfläche bildenden Mantelfläche von der Straßenoberfläche weg nach radial innen zum Fahrzeugrad eingebogen wird. Der Berührkontakt zur Straßenoberfläche ist im Bereich der die Straßenkontaktoberfläche bildenden Mantelfläche zum Teil kaum noch oder nicht mehr vorhanden. Die von der Außenkurve wegweisende zwischen Rippenwand und Rippenmantelfläche gebildete Kante wird ebenfalls nach radial innen unter Lösen des Kontaktes zur Straßenoberfläche verbogen und erstreckt sich mit ihrem Volumen in die angrenzende Umfangsrille. Die Ungleichmäßigkeit der hergestellten Kontaktfläche zwischen Straßenoberfläche und Umfangsrippe reduziert die übertragbaren Seitenkräfte bei trockener und bei nasser Straßenoberfläche. Das in den radial äußeren Bereich der angrenzenden Umfangsrille eindringende Volumen der Umfangsrippe reduziert sowohl die Kapazität als auch die Geschwindigkeit der Aufnahme von Wasser, Matsch oder Schnee in die Umfangsrille, was Aquaplaning begünstigen kann.

Ein derartiger Fahrzeugluftreifen ist aus dem Dokument JP 10029409 A bekannt.

Der Erfindung liegt die Aufgabe zugrunde, bei einem Fahrzeugluftreifen -insbesondere für PKW - mit einem asymmetrischen Laufstreifenprofil mit einer zur Fahrzeugaußenseite weisenden Außenschulter und mit einer zur Fahrzeuginnenseite weisenden Innenschulter und mit wenigstens einer über den Umfang des Fahrzeugluftreifens erstreckten Umfangsrippe, die in axialer Richtung A des Fahrzeugluftreifens jeweils durch eine Umfangsrille begrenzt ist, wobei die Umfangsrippe nach radial außen mit einer die Straßenkontaktfläche bildenden Mantelfläche und in beiden axialen Richtungen jeweils mit einer eine Rillenwand der angrenzenden Umfangsrille bildenden Rippenflanke begrenzt ist, wobei die beiden Rippenflanken jeweils mit einem ersten radial inneren und aus einem zweiten radial äußeren radialen Erstreckungsbereich ausgebildet sind, von denen sich jeweils der radial innere erste Erstreckungsbereich aus dem Rillengrund nach radial außen bis zum zweiten radial äußeren Erstreckungsbereich und der zweite radial äußere Erstreckungsbereich von dem ersten radial inneren Erstreckungsbereich nach radial außen bis zu der die Umfangsrippe nach radial außen begrenzenden, die Straßenkontaktfläche bildenden Mantelfläche erstrecken, mit einfachen Mitteln eine hohe, sichere Seitenkraftübertragung bei Kurvenfahrt auf nasser und trockener Straße und gute Aquaplaningsicherheit zu ermöglichen.

Erfindungsgemäß wird die Aufgabe durch Ausbildung eines Fahrzeugluftreifens - insbesondere für PKW - mit einem asymmetrischen Laufstreifenprofil mit einer zur Fahrzeugaußenseite weisenden Außenschulter und mit einer zur Fahrzeuginnenseite weisenden Innenschulter und mit wenigstens einer über den Umfang des Fahrzeugluftreifens erstreckten Umfangsrippe, die in axialer Richtung A des Fahrzeugluftreifens jeweils durch eine Umfangsrille begrenzt ist, wobei die Umfangsrippe nach radial außen mit einer die Straßenkontaktfläche bildenden Mantelfläche und in beiden axialen Richtungen jeweils mit einer eine Rillenwand der angrenzenden Umfangsrille bildenden Rippenflanke begrenzt ist, wobei die beiden Rippenflanken jeweils mit einem ersten radial inneren und aus einem zweiten radial äußeren radialen Erstreckungsbereich ausgebildet sind, von denen sich jeweils der radial innere erste Erstreckungsbereich aus dem Rillengrund nach radial außen bis zum zweiten radial äußeren Erstreckungsbereich und der zweite radial äußere Erstreckungsbereich von dem ersten radial inneren Erstreckungsbereich nach radial außen bis zu der die Umfangsrippe nach radial außen begrenzenden, die Straßenkontaktfläche bildenden Mantelfläche erstrecken, gemäß den Merkmalen von Anspruch 1 gelöst, bei dem die axial zur Innenschulter des Fahrzeugluftreifens weisende Rippenflanke in ihren Schnittebenen senkrecht zur Längserstreckungsrichtung der durch diese Rippenflanke begrenzten Umfangsrille im ersten Erstreckungsbereich mit einer im Wesentlichen geradlinigen Schnittkonturlinie mit einem Neigungswinkel β zur radialen Richtung R und im zweiten Erstreckungsbereich mit einer im Wesentlichen geradlinigen Schnittkonturlinie mit einem Neigungswinkel α zur radialen Richtung R ausgebildet ist, wobei die Schnittkonturlinie zumindest des zweiten Erstreckungsbereichs von radial innen nach radial außen mit axialer Neigung in Richtung zur Umfangsrippe ausgebildet ist mit α > β, und bei dem die axial zur Außenschulter des Fahrzeugluftreifens weisende Rippenflanke in ihren Schnittebenen senkrecht zur Längserstreckungsrichtung der durch diese Rippenflanke begrenzten Umfangsrille im ersten Erstreckungsbereich mit einer im Wesentlichen geradlinigen Schnittkonturlinie mit einem Neigungswinkel γ zur radialen Richtung R und im zweiten Erstreckungsbereich mit einer um einen Krümmungsmittelpunkt M₁ mit Krümmungsradius R₁ gekrümmten Schnittkonturlinie ausgebildet ist, wobei der Krümmungsmittelpunkt M₁ auf der von der Schnittkonturlinie zur Umfangsrippe weisenden Seite liegt. Die Ausbildung ermöglicht aufgrund der an der zur Außenschulter weisenden Rippenflanke ausgebildeten Krümmung, dass die hauptsächlich in einer Kurve belasteten kurvenäußeren Fahrzeugluftreifen im Bereich der Umfangsrippe mit ihrer zur Außenschulter weisenden Rippenflanke im Übergang zu der die Straßenkontaktfläche bildenden Mantelfläche sicher an die Straßenoberfläche ohne Einrollen angeschmiegt wird und die die Straßenkontaktfläche bildende Mantelfläche der Umfangsrippe über ihre axiale Erstreckung hinweg aufgrund der reduzierten Deformationen in vergleichmäßigt angeschmiegtem Berührkontakt zur Straßenoberfläche anliegt. Durch die reduzierte Deformation in Verbindung mit der Ausbildung der zur Innenschulter weisenden Rippenflanke wird das Eindringen von Rippenvolumen in die Umfangsrille minimiert, wodurch eine große Aufnahmekapazität von Wasser, Matsch oder Schnee der Umfangsrille und ein schnelles Aufnehmen dieser Kapazität gewährleistet werden kann. Somit wird mit einfachen Mitteln eine hohe, sichere Seitenkraftübernagung bei Kurvenfahrt auf nasser und trockener Straße und gute Aquaplaningsicherheit ermöglicht.

Besonders vorteilhaft ist die Ausbildung eines Fahrzeugluftreifens gemäß den Merkmalen von Anspruch 2, wobei der Krümmungsradius R₁ mit 1mm ≤ R₁≤ 5mm - insbesondere 2mm ≤ R₁≤ 3mm - ausgebildet ist. Hierdurch wird beim Handling ein besonders guter Fahrbahnkontakt ermöglicht, da die sich die die Blockkante des Profilblockelementes auf diese Weise allmählich den in dieser Situation einwirkenden Kräften anpasst.

Besonders vorteilhaft ist die Ausbildung eines Fahrzeugluftreifens gemäß den Merkmalen von Anspruch 3, wobei α mit 30° ≤ α ≤ 60° - insbesondere mit 42° ≤ α ≤ 48° - ausgebildet ist. Hierdurch werden sehr zuverlässig sowohl Steifigkeit als auch Aufnahmevolumen der Umfangsrille optimiert und Material eingespart.

Besonders vorteilhaft ist die Ausbildung eines Fahrzeugluftreifens gemäß den Merkmalen von Anspruch 4, wobei die Schnittkonturlinie auch des ersten Erstreckungsbereichs der axial zur Innenschulter des Fahrzeugluftreifens weisenden Rippenflanke von radial innen nach radial außen mit axialer Neigung in Richtung zur Umfangsrippe hin ausgebildet ist und der Neigungswinkel β zur radialen Richtung R mit 0° ≤ β ≤ 5° - insbesondere mit 0° ≤ β ≤ 3° - ausgebildet ist. Die hierdurch bedingten steilen Flanken ermöglichen, aufgrund der hierdurch bedingten großen Rillenvolumina eine zusätzliche Optimierung der Aquaplaningeigenschaften.

Besonders vorteilhaft ist die Ausbildung eines Fahrzeugluftreifens gemäß den Merkmalen von Anspruch 5, wobei die Schnittkonturlinie auch des ersten Erstreckungsbereichs der axial zur Außenschulter des Fahrzeugluftreifens weisenden Rippenflanke von radial innen nach radial außen mit axialer Neigung in Richtung zur Umfangsrippe hin ausgebildet ist und der Neigungswinkel γ zur radialen Richtung R mit 0° ≤ γ ≤ 5° - insbesondere mit 0° ≤ γ ≤ 3° - ausgebildet ist. Die hierdurch bedingten steilen Flanken ermöglichen, aufgrund der hierdurch bedingten großen Rillenvolumina eine zusätzliche Optimierung der Aquaplaningeigenschaften.

Besonders vorteilhaft ist die Ausbildung eines Fahrzeugluftreifens gemäß den Merkmalen von Anspruch 6, wobei an der axial zur Außenschulter des Fahrzeugluftreifens weisenden Rippenflanke der erste Erstreckungsbereich die tangentiale Verlängerung zur Krümmungslinie des zweiten Erstreckungsbereiches im Übergangspunkt zwischen erstem und zweitem Erstreckungsbereich bildet. Hierdurch wird beim Handling ein besonders guter Fahrbahnkontakt ermöglicht, da die sich die die Blockkante des Profilblockelementes auf diese Weise allmählich den in dieser Situation einwirkenden Kräften anpasst.

Besonders vorteilhaft ist die Ausbildung eines Fahrzeugluftreifens gemäß den Merkmalen von Anspruch 7, wobei die die Umfangsrippe nach radial außen begrenzende, die Straßenkontaktfläche bildenden Mantelfläche die tangentiale Verlängerung zur Krümmungslinie des zweiten Erstreckungsbereiches der axial zur Außenschulter des Fahrzeugluftreifens weisenden Rippenflanke im Übergangspunkt zwischen dem zweitem Erstreckungsbereich und der die Umfangsrippe nach radial außen begrenzenden, die Straßenkontaktfläche bildenden Mantelfläche bildet. Hierdurch wird beim Handling ein besonders guter Fahrbahnkontakt ermöglicht, da die sich die die Blockkante des Profilblockelementes auf diese Weise allmählich den in dieser Situation einwirkenden Kräften anpasst.

Besonders vorteilhaft ist die Ausbildung eines Fahrzeugluftreifens gemäß den Merkmalen von Anspruch 8, wobei der zweite, äußere Erstreckungsbereich der axial zur Innenschulter des Fahrzeugluftreifens weisenden Rippenflanke mit einer in radialer Richtung R gemessenen Erstreckungshöhe H₂ ausgebildet ist mit H₂ ≤ (1/3)Pₜᵢ, wobei die Profiltiefe Pₜᵢ das Maß der maximalen radialen Erstreckung der durch die axial zur Innenschulter des Fahrzeugluftreifens weisenden Rippenflanke begrenzten Umfangsrille angibt. Dies begünstigt die Sicherstellung der für Handling ausreichenden Steifigkeit der Umfangsrippe und sicherer Bodenhaftung.

Besonders vorteilhaft ist die Ausbildung eines Fahrzeugluftreifens gemäß den Merkmalen von Anspruch 9, wobei 1mm ≤ H₂ ≤ 2mm. Dies begünstigt sehr zuverlässig die Sicherstellung der für Handling ausreichenden Steifigkeit der Umfangsrippe und sicherer Bodenhaftung.

Besonders vorteilhaft ist die Ausbildung eines Fahrzeugluftreifens gemäß den Merkmalen von Anspruch 10, wobei der zweite, äußere Erstreckungsbereich der axial zur Außenschulter des Fahrzeugluftreifens weisenden Rippenflanke mit einer in radialer Richtung R gemessenen Erstreckungshöhe H₄ ausgebildet ist mit H₄ ≤ (1/3)Pₜₐ, wobei die Profiltiefe Pₜₐ das Maß der maximalen radialen Erstreckung der durch die axial zur Außenschulter des Fahrzeugluftreifens weisenden Rippenflanke begrenzten Umfangsrille angibt. Dies begünstigt die Sicherstellung der für Handling ausreichenden Steifigkeit der Umfangsrippe und sicherer Bodenhaftung.

Die Erfindung wird im Folgenden an Hand der in denn Fig. 1 bis 6 dargestellten Ausführungsbeispiele näher erläutert. Darin zeigen
- Fig. 1: Umfangsabschnitt eines Laufstreifenprofils eines Fahrzeugluftreifens für Pkw,
- Fig. 2: Querschnittsdarstellung des Laufstreifenprofils von Fig. 1 gemäß Schnitt II-II von Fig.1,
- Fig. 3: Querschnittsdarstellung der zentralen Umfangsrippe von Fig. 1 gemäß Schnitt III-III von Fig. 1,
- Fig. 4: Umfangsrippe von Fig. 3 in perspektivischer Darstellung,
- Fig. 5: Schematische Darstellung der Umfangsrippe von Fig. 3 im montierten Zustand des Fahrzeugluftreifens unter Belastung bei Kurvenfahrt und
- Fig. 6: Schematische Darstellung einer herkömmlichen Umfangsrippe im montierten Zustand unter Belastung bei Kurvenfahrt.

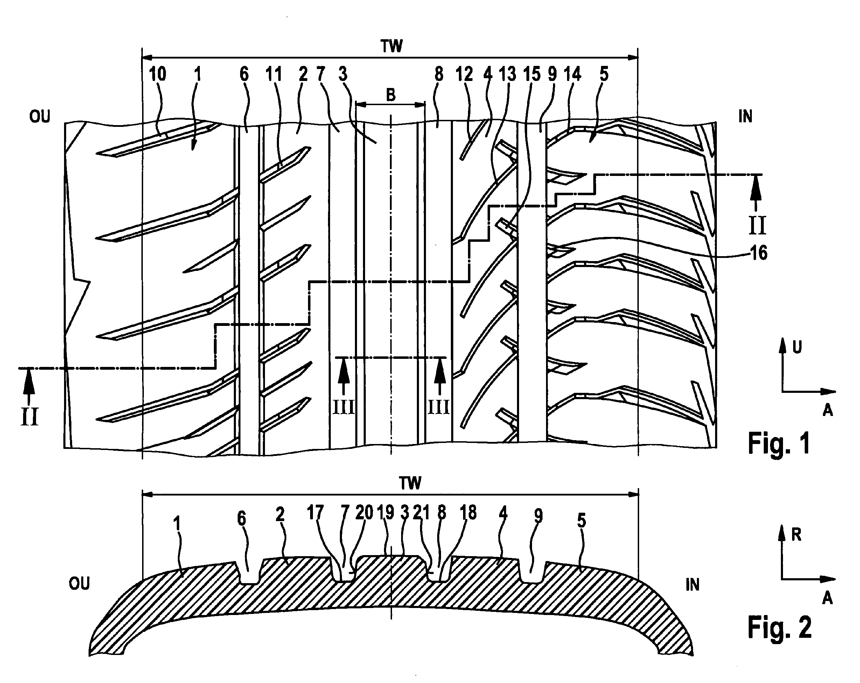

Die Figuren 1 und 2 zeigen ein asymmetrisches Laufstreifenprofil eines Fahrzeugluftreifens bekannter Art für Personenkraftwagen (Pkw). Der Fahrzeugluftreifen ist ein herkömmlicher Fahrzeugluftreifen radialer Bauart mit einer nicht dargestellten herkömmlichen Karkasse radialer Bauart aus ein oder zwei Karkassenlagen von in Kautschuk eingebetteten Festigkeitsträgern bekannter Art. Die Karkassenlagen erstrecken sich über den gesamten axialen Erstreckungsbereich des Fahrzeugluftreifens und über den gesamten Umfang des Fahrzeugluftreifens. Die Karkassenlagen sind mit ihren axialen Enden in herkömmlicher, nicht dargestellter Weise im radial inneren Erstreckungsbereich des Fahrzeugluftreifens um jeweils einen Wulstkern bekannter Bauart umgeschlagen. Radial außerhalb der nicht dargestellten Karkasse ist in bekannter nicht dargestellter Weise ein Gürtel aus einer oder zwei Gürtellagen von in Kautschuk eingebetteten Festigkeitsträgern bekannter Art ausgebildet. Die Gürtellagen erstrecken sich in bekannter nicht dargestellter Weise über den gesamten Umfang des Fahrzeugluftreifens und in axialer Richtung von der in Fig. 2 rechts dargestellten rechten bis zur links dargestellten linken Reifenschulter. Die Festigkeitsträger der Karkasse sind bekannte textile Festigkeitsträger zum Einsatz in Karkassen. Die Festigkeitsträger des Gürtels sind bekannte Corde aus Stahl oder Aramid. Radial oberhalb der Gürtellagen befindet sich in bekannter Weise im Bereich der Reifenschultern jeweils ein Abdeckstreifen aus in Kautschuk eingebetteten in Umfangsrichtung des Fahrzeugluftreifens orientierten Festigkeitsträgern. Radial außerhalb des aus Gürtellagen und Abdeckstreifen gebildeten Gürtelpaketes ist in bekannter Weise ein profilierter Laufstreifen ausgebildet, dessen Profilierung in den Figuren 1 und 2 zu erkennen ist.

In den Figuren 1 und 2 ist auf der linken Seite mit "OU" gekennzeichnet die im montierten Zustand des Fahrzeugluftreifens zur Fahrzeugaußenseite weisende und auf der rechten Seite mit "IN" dargestellte zur Fahrzeuginnenseite weisende axiale Seite des Reifens eingetragen.

Wie in den Figuren 1 und 2 zu erkennen ist, ist das Laufstreifenprofil in axialer Richtung A von links nach rechts dargestellt im Bereich der zur Fahrzeugaußenseite OU weisenden Reifenschulter mit einer eine Schulterprofilblockreihe bildenden Profilblockreihe 10 und im Bereich der zur Fahrzeuginnenseite IN weisenden Reifenschulter mit einer eine Schulterprofilblockreihe bildenden Profilblockreihe 5 ausgebildet. Die in axialer Richtung A des Fahrzeugluftreifens nebeneinander angeordnet ist die Schulterprofilblockreihe 1, ein Profilrippe 2, eine Profilrippe 3, eine Profilblockreihe 4 und die Schulterprofilblockreihe 5. Die Schulterprofilblockreihe 1, die Profilrippe 2, die Profilrippe 3, die Profilblockreihe 4 und die Schulterprofilblockreihe 5 sind jeweils in Umfangsrichtung U des Fahrzeugluftreifens ausgerichtet und über den gesamten Umfang des Fahrzeugluftreifens erstreckt ausgebildet. Die Schulterprofilblockreihe 1 und die Profilrippe 2 sind in axialer Richtung A lediglich durch eine über den gesamten Umfang des Fahrzeugluftreifens erstreckte und in Umfangsrichtung U ausgerichtete Umfangsrille 6 voneinander getrennt. Die Profilrippe 2 und die Profilrippe 3 sind in axialer Richtung A durch eine über den gesamten Umfang des Fahrzeugluftreifens erstreckte und in Umfangsrichtung U ausgerichtete Umfangsrille 7 voneinander getrennt. Die Profilrippe 3 und die Profilblockreihe 4 sind in axialer Richtung A durch eine über den gesamten Umfang des Fahrzeugluftreifens erstreckte und in Umfangsrichtung U ausgerichtete Umfangsrille 8 voneinander getrennt. Die Profilrippe 4 und die Schulterprofilblockreihe 5 sind jeweils durch eine über den gesamten Umfang des Fahrzeugluftreifens erstreckte und in Umfangsrichtung U ausgerichtete Umfangsrille 9 voneinander getrennt.

Die Profilblockreihe 1 ist aus einer Vielzahl von in Umfangsrichtung U des Fahrzeugluftreifens hintereinander angeordneten und jeweils durch eine Querrille 10 voneinander getrennt angeordneten Profilblockelementen bekannter Art ausgebildet. Die Profilblockreihe 5 ist aus einer Vielzahl von in Umfangsrichtung U hintereinander angeordneten und jeweils durch eine Querrille 14 voneinander getrennten Profilblockelementen bekannter Art ausgebildet. Die Profilblockreihe 4 ist aus einer Vielzahl von in Umfangsrichtung U hintereinander angeordneten und jeweils durch eine Querrille 13 voneinander getrennt angeordneten Profilblockelementen bekannter Art ausgebildet. Die Querrillen 10 der Profilblockreihe 1 erstrecken sich ausgehend von der Umfangsrille 6 in axialer Richtung A bis in eine Position außerhalb der Bodenaufstandsfläche TW. Die Querrillen 14 erstrecken sich ausgehend von der Umfangsrille 9 in axialer Richtung A nach außen bis in eine Position außerhalb der Bodenaufstandsfläche TW. Die Querrillen 10 erstrecken in ihrer axialen Verlängerung über die Umfangsrille 6 hinweg in Form von Querrillen 11 bis in die Umfangsrippe 2 hinein und enden dort in axialem Abstand von der Umfangsrille 7. Die Querrillen 14 der Profilblockreihe 5 erstrecken sich in ihrer axialen Verlängerung über die Umfangsrille 9 hinweg in Form von Querrillen 13 bzw. 12 durch die Profilblockreihe 4 hin durch. Die Querrillen 13 und 12 sind in Umfangsrichtung U in alternierender Reihenfolge ausgebildet. Die Querrillen 13 münden in der Umfangsrille 8. Nahezu parallel verlaufend zu den Querrillen 13 sind immer zwischen zwei Querrillen 13 eine Querrille 12 in der Profilblockrille 4 ausgebildet, wobei sich jede Querrille 12 ausgehend von der Umfangsrille 9 in Richtung Umfangsrille 8 durch die Profilblockreihe 4 hindurch erstreckt und mit axialem Abstand von der Umfangsrille 8 in der Profilblockreihe 4 mündet. Die Querrillen 10, 11, 12 und 14 sind ausgehend von der Profilblockreihe 10 in axialer Richtung A bis zur Profilblockreihe 5 gesehen mit einer gleich gerichteten Umfangserstreckungskomponente ihrer Ausrichtung ausgebildet. Zusätzlich ist in der Profilblockreihe 4 eine Querrille 15 ausgebildet, die sich ausgehend von der Umfangsrille 9 über einen kurzen axialen Erstreckungsabschnitt, der kleiner als die Hälfte der axialen Erstreckung der Profilblockreihe 4 ist, in die Profilblockreihe 4 hinein erstreckt und dort mündet. Die Querrille 15 ist in ihrer axialen Verlängerung über die Umfangsrille 9 hinweg als Querrille 16 in der Profilblockreihe 5 weiter geführt und endet noch vor Erreichen der axialen Begrenzung der Aufstandsfläche TW. Wie in Fig. 1 zu erkennen ist, kreuzen sich die Querrille 15 und 13 der Profilblockreihe 4 im Bereich ihrer Mündungsstelle in der Umfangsrille 9.

Wie in Fig. 2, Fig. 3 und Fig. 4 zu erkennen ist, ist die Profilrippe 3 nach radial außen durch eine Mantelfläche 19 begrenzt, die die Straßenkontaktoberfläche der Profilrippe 3 bildet. Die Profilrippe 3 ist in axialer Richtung A zu der zur Außenseite OU die Profilrippe 3 begrenzenden Umfangsrille 7 durch eine über den gesamten Umfang des Fahrzeugluftreifens erstreckte, in Umfangsrichtung U ausgerichtete Rippenflanke 20 begrenzt, die die zur Profilrippe 3 weisende Rillenwand der Umfangsrille 7 bildet. Die Profilrippe 3 ist zu der zur Fahrzeuginnenseite IN die Profilrippe 3 begrenzenden Umfangsrille 8 durch eine über den gesamten Umfang des Fahrzeugluftreifens erstreckte, in Umfangsrichtung U ausgerichtete Rillenwand 21 begrenzt, die die zur Profilrippe 3 weisende Rillenwand der Umfangsrille 8 bildet.

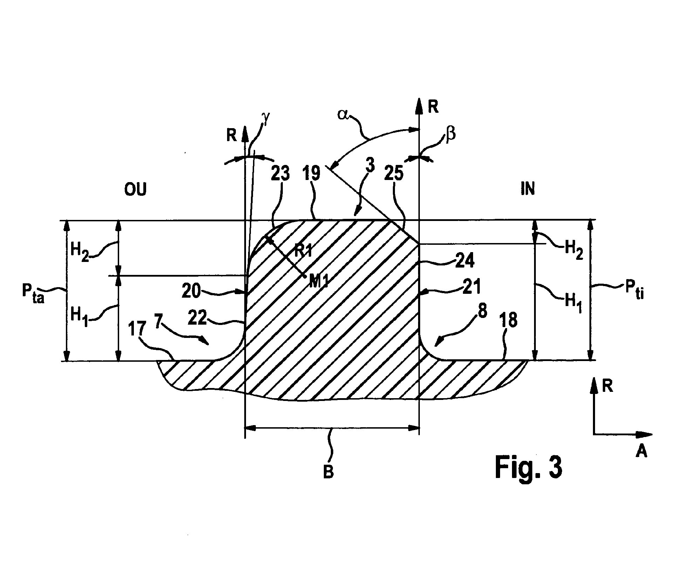

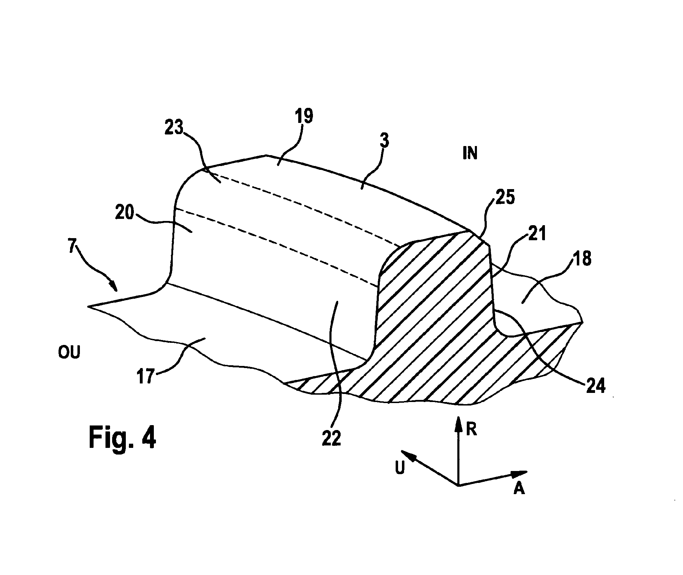

Wie in den Figuren 3 und 4 dargestellt ist, ist die Rillenwand 20 aus einem ersten radial inneren Erstreckungsbereich 22 und einem zweiten radial äußeren, unmittelbar an den ersten Erstreckungsbereich 22 anschließenden Erstreckungsbereich 23 ausgebildet. Der radial innere Erstreckungsbereich 22 erstreckt sich ausgehend von dem die Umfangsrille 7 nach radial innen begrenzenden und über den gesamten Umfang des Fahrzeugluftreifens erstreckt ausgebildeten Rillengrund 17 nach radial außen bis in eine radiale Position mit radialem Abstand H₃ über der radialen Position des tiefsten Punktes des Rillengrundes 17 der Umfangsrille 7. Unmittelbar im Anschluss an den ersten Erstreckungsbereich 22 erstreckt sich die Rillenwand 20 mit ihrem zweiten Erstreckungsbereich 23 über ein radiales Erstreckungsmaß H₄ bis zur radial äußeren die Straßenkontaktoberfläche bildenden Mantelfläche 19 der Profilrippe 3. Die Summe H₃ + H₄ = Pₜₐ, wobei Pₜₐ die Profiltiefe im Bereich der Umfangsrille 7 und somit das maximale Maß der radialen Erstreckung der Umfangsrille 7 gemessen zwischen tiefstem Punkt des Rillengrundes 17 und der radial äußeren Mantelfläche 19 der angrenzenden Profilrippe 3 angibt. Für die Maße H₄ und Pₜₐ gilt: H₄ ≤ 1/3 Pₜₐ

Der erste radial innere Erstreckungsabschnitt 22 der Rippenwand 20 ist in allen Querschnittsebenen senkrecht zur Erstreckungsrichtung der Profilrippe 3 und somit senkrecht zur Umfangsrichtung U jeweils mit geradliniger Kontur ausgebildet und schließt einen Neigungswinkel γ zur radialen Richtung R des Fahrzeugluftreifens ein. Die Neigungsrichtung ist dabei so gewählt, dass die Rillenwand im Erstreckungsbereich 22 in radialer Richtung R nach außen gesehen zur Profilrippe 3 hin geneigt ist. Der radial äußere, zweite Erstreckungsbereich 23 ist in den Schnittebenen senkrecht zur Erstreckungsrichtung der Profilrippe 3 mit einer um einen Mittelpunkt M₁ gekrümmten und mit Radius R₁ ausgebildeten Kreisausschnittskontur ausgebildet. Der Mittelpunkt M₁ liegt auf der vom zweiten Erstreckungsabschnitt 23 der Rillenwand 20 zur Profilrippe 3 weisenden Seite. Der erste Erstreckungsbereich 22 bildet die tangentiale Verlängerung an die Kreisausschnittskontur des zweiten Erstreckungsabschnitts 23 im Übergangspunkt zwischen erstem Erstreckungsbereich 22 und zweitem Erstreckungsbereich 23. Die radial äußere Mantelfläche 19 bildet die tangentiale Verlängerung an die Kreisausschnittskontur des zweiten Erstreckungsabschnitts 23 im Übergangspunkt zwischen zweitem Erstreckungsbereich 23 der Rippenwand 20 und der radial äußeren Mantelfläche 19.

Wie in den Figuren 3 und 4 dargestellt ist, ist die zur Innenseite IN weisende, die Profilrippe 3 begrenzende Rillenwand 21 aus einem ersten radial inneren Erstreckungsbereich 24 und einem zweiten radial äußeren, unmittelbar an den ersten Erstreckungsbereich 24 anschließenden Erstreckungsbereich 25 ausgebildet. Der radial innere Erstreckungsbereich 24 erstreckt sich ausgehend von dem die Umfangsrille 8 nach radial innen begrenzenden und über den gesamten Umfang des Fahrzeugluftreifens erstreckt ausgebildeten Rillengrund 18 nach radial außen bis in eine radiale Position mit radialem Abstand H₁ über der radialen Position des tiefsten Punktes des Rillengrundes 18 der Umfangsrille 8. Unmittelbar im Anschluss an den ersten Erstreckungsbereich 24 erstreckt sich die Rillenwand 21 mit ihrem zweiten Erstreckungsbereich 25 über ein radiales Erstreckungsmaß H₂ bis zur radial äußeren die Straßenkontaktoberfläche bildenden Mantelfläche 19 der Profilrippe 3. Die Summe H₁ + H₂ = Pₜᵢ, wobei Pₜᵢ die Profiltiefe im Bereich der Umfangsrille 8 und somit das maximale Maß der radialen Erstreckung der Umfangsrille 8 gemessen zwischen tiefstem Punkt des Rillengrundes 18 und der radial äußeren Mantelfläche 19 der angrenzenden Profilrippe 3 angibt. Für die Maße H₁, H₂ und Pₜᵢ gilt: H₁ + H₂ = Pₜᵢ mit H₂ ≤ 1/3 Pₜᵢ.

Die Rillenwand 21 ist mit ihrem ersten radialen Erstreckungsbereich 24 in allen Schnittebenen senkrecht zur Ausrichtung der Profilrippe 3 geradlinig ausgebildet mit einem Neigungswinkel ß zur radialen Richtung R, wobei die Neigung so gewählt ist, dass der Erstreckungsbereich 24 von radial innen nach radial außen gesehen in der axialen Richtung zur Profilrippe 3 hin geneigt ist. Der zweite radiale Erstreckungsbereich 25 ist in allen Querschnittsebenen senkrecht zur Erstreckungsrichtung zur Profilrippe 3 geradlinig ausgebildet mit einem Neigungswinkel α zur radialen Richtung R, wobei die Neigungsrichtung so gewählt ist, dass sie in radialer Richtung von innen nach außen gesehen axial zur Profilrippe 3 hin geneigt ist. Für die Neigungswinkel α und ß gilt α >ß.

Die Winkel ß und γ des ersten Erstreckungsbereiches 22 der Rippenwand 20 und des ersten Erstreckungsbereiches 24 der Rippenwand 21 sind so gewählt, dass hierfür gilt:
0° ≤ ß ≤ 5° und 0° ≤ γ ≤ 5°. In einer Ausführung sind γ und ß so gewählt, dass 0°≤ß≤3° und 0° ≤ γ ≤ 3°. In dem in Fig.3 dargestellten Ausführungsbeispiel ist ß = 0° und γ = 3° gewählt.

Der Neigungswinkel α des zweiten Erstreckungsbereiches 25 der Rippenwand 21 ist so gewählt, dass 30° ≤ α ≤ 60°. In einer Ausführung ist α so gewählt, dass 42°≤α≤48°. In dem in Fig.3 dargestellten Ausführungsbeispiel ist α = 45° gewählt.

Der Krümmungsradius R₁ des zweiten radialen Erstreckungsbereiches 23 der Rippenwand 20 ist so gewählt, dass hierfür gilt: 1mm ≤ R₁ ≤ 5mm. In einer Ausführung ist R₁ so gewählt, dass 2mm ≤ R₁ ≤ 3mm. In dem dargestellten Ausführungsbeispiel ist R₁ = 3mm gewählt.

Die Maße Pₜᵢ und Pₜₐ stellen jeweils die Maße der Profiltiefe des Fahrzeugluftreifens im Neuzustand bei unbelastetem Fahrzeugluftreifen dar.

Die Profilrippe 3 ist mit einer in axialer Richtung A des Fahrzeugluftreifens gemessenen Breite B ausgebildet, die im Bereich der größten Breite im jeweiligen Querschnitt der Rippe gemessen wird, wobei B mit 20mm ≤ B ≤ 40mm gewählt ist. Beispielsweise ist B=30mm gewählt.

Die Maße Pₜᵢ und Pₜₐ sind beim Neureifen so gewählt, dass 7mm≤Pₜᵢ≤10mm und 7mm≤Pₜₐ ≤10mm. In einer Ausführung ist 8mm ≤ Pₜᵢ ≤ 9mm und 8mm ≤ Pₜₐ ≤ 9mm gewählt. In der konkret dargestellten Ausführung ist Pₜᵢ = Pₜₐ = 8,5mm gewählt.

Die radiale Erstreckungshöhe H₂ des radial zweiten Erstreckungsbereiches 25 der Rippenwand 21 ist in einer Ausführung beispielsweise so gewählt, dass 1mm ≤ H₂ ≤ 2mm. Im dargestellten Ausführungsbeispiel ist H₂ = 1,5 mm gewählt.

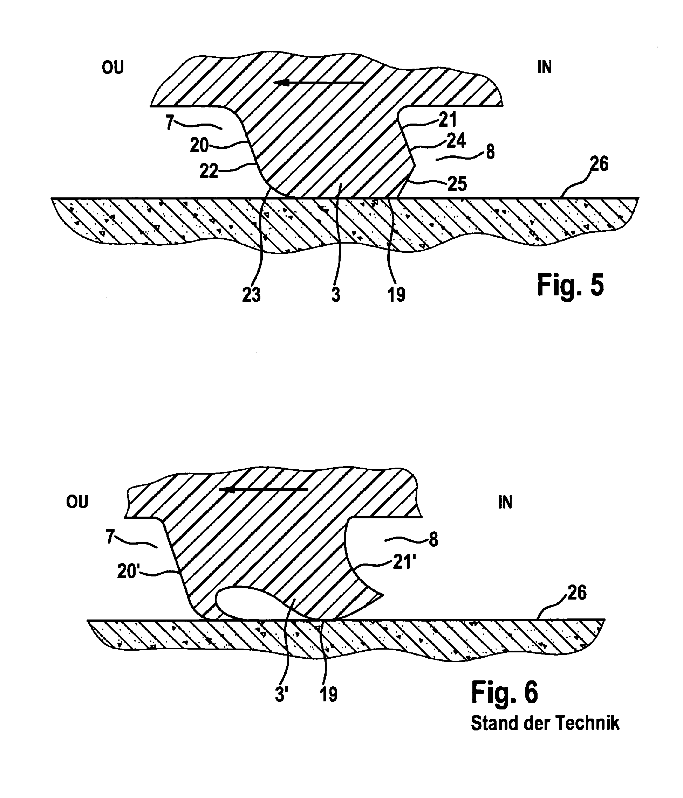

Fig. 6 zeigt - in zur Verdeutlichung übertriebener Darstellung - die Belastung und Deformation einer herkömmlichen Profilrippe 3' ohne die erfindungsgemäße Ausbildung der beiden Rippenwände. Dabei ist erkennbar, dass bei Belastung des fahrzeugäußeren Rades bei Kurvenfahrt die Profilrippe 3' im Bereich der zur Fahrzeugaußenseite OU weisenden Rippenwand 20' im Kontaktbereich zur Straßenoberfläche 26 regelrecht einrollt und die Mantelfläche 19 deformiert wird, wobei in Belastungsrichtung zwischen vorderem eingerollten Bereich und hinterem Bereich der Mantelfläche 19 ein axialer Erstreckungsabschnitt der Mantelfläche 19 kontaktfrei zur Straßenoberfläche verbleibt. Der zur Fahrzeuginnenseite IN weisende Bereich der radial äußeren Mantelfläche 19 hebt regelrecht von der Straßenoberfläche ab, wobei der Übergangsbereich zwischen Mantelfläche 19 und Rippenwand 21' regelrecht in die durch die Rippenwand 21' begrenzte Umfangsrille 8 eindringt.

Fig. 5 zeigt das vergleichbare Verhalten der erfindungsgemäß ausgebildeten Profilrippe 3. Dabei ist erkennbar, dass bei Belastung des fahrzeugäußeren Rades bei Kurvenfahrt die Profilrippe 3 im Bereich der zur Fahrzeugaußenseite OU weisenden Rippenwand 20 in ihrem zweiten Erstreckungsbereich 23 aufgrund der Krümmung ein regelrechtes großflächiges Anschmiegen an die Fahrbahnoberfläche bewirkt und die Profilrippe 3 mit ihrer radial äußeren Mantelfläche 19 großflächig gleichmäßig an der Straßenoberfläche bis zum radial äußeren zweiten Erstreckungsbereich 25 der Rippenwand 24 anliegt. Der Übergang zwischen Rillenwand 24 und radial äußerer Mantelfläche 19 dringt nicht in die durch die Rillenwand 24 begrenzte Umfangsrille 8 ein.

### Bezugszeichenliste

- 1: Profilblockreihe
- 2: Profilrippe
- 3: Profilrippe
- 4: Profilblockreihe
- 5: Profilblockreihe
- 6: Umfangsrille
- 7: Umfangsrille
- 8: Umfangsrille
- 9: Umfangsrille
- 10: Querrille
- 11: Querrille
- 12: Querrille
- 13: Querrille
- 14: Querrille
- 15: Querrille
- 16: Querrille
- 17: Rillengrund
- 18: Rillengrund
- 19: Mantelfläche
- 20: Rippenflanke
- 21: Rippenflanke
- 22: Erster Erstreckungsbereich
- 23: Zweiter Erstreckungsbereich
- 24: Erster Erstreckungsbereich
- 25: Zweiter Erstreckungsbereich
- 26: Straßenoberfläche

## Patentansprüche

1. Fahrzeugluftreifen -insbesondere für PKW - mit einem asymmetrischen Laufstreifenprofil mit einer zur Fahrzeugaußenseite weisenden Außenschulter OU und mit einer zur Fahrzeuginnenseite weisenden Innenschulter IN und mit wenigstens einer über den Umfang des Fahrzeugluftreifens erstreckten Umfangsrippe (3), die in axialer Richtung A des Fahrzeugluftreifens jeweils durch eine Umfangsrille (7,8) begrenzt ist, wobei die Umfangsrippe (3) nach radial außen mit einer die Straßenkontaktfläche bildenden Mantelfläche (19) und in beiden axialen Richtungen A jeweils mit einer eine Rillenwand der angrenzenden Umfangsrille (7,8) bildenden Rippenflanke (20,21) begrenzt ist, wobei die beiden Rippenflanken (20,21) jeweils mit einem ersten radial inneren (22,24) und aus einem zweiten radial äußeren (23,25) radialen Erstreckungsbereich ausgebildet sind, von denen sich jeweils der radial innere erste Erstreckungsbereich (22,24) aus dem Rillengrund (17,18) nach radial außen bis zum zweiten radial äußeren Erstreckungsbereich (23,25) und der zweite radial äußere Erstreckungsbereich (23,25) von dem ersten radial inneren Erstreckungsbereich (22,24) nach radial außen bis zu der die Umfangsrippe (3) nach radial außen begrenzenden, die Straßenkontaktfläche bildenden Mantelfläche (19) erstrecken,
wobei die axial zur Außenschulter OU des Fahrzeugluftreifens weisende Rippenflanke (20) in ihren Schnittebenen senkrecht zur Längserstreckungsrichtung der durch diese Rippenflanke (20) begrenzten Umfangsrille (17) im zweiten Erstreckungsbereich (23) mit einer um einen Krümmungsmittelpunkt M₁ mit Krümmungsradius R₁ gekrümmten Schnittkonturlinie ausgebildet ist, wobei der Krümmungsmittelpunkt M₁ auf der von der Schnittkonturlinie zur Umfangsrippe (3) weisenden Seite liegt,
**dadurch gekennzeichnet,**
**dass** die axial zur Innenschulter IN des Fahrzeugluftreifens weisende Rippenflanke (21) in ihren Schnittebenen senkrecht zur Längserstreckungsrichtung der durch diese Rippenflanke (21) begrenzten Umfangsrille (8) im ersten Erstreckungsbereich (24) mit einer im Wesentlichen geradlinigen Schnittkonturlinie mit einem Neigungswinkel β zur radialen Richtung R und im zweiten Erstreckungsbereich (25) mit einer im Wesentlichen geradlinigen Schnittkonturlinie mit einem Neigungswinkel α zur radialen Richtung R ausgebildet ist, wobei die Schnittkonturlinie zumindest des zweiten Erstreckungsbereichs (25) von radial innen nach radial außen mit axialer Neigung in Richtung zur Umfangsrippe (3) ausgebildet ist mit α > β, und
**dass** die axial zur Außenschulter OU des Fahrzeugluftreifens weisende Rippenflanke (20) in ihren Schnittebenen senkrecht zur Längserstreckungsrichtung der durch diese Rippenflanke (20) begrenzten Umfangsrille (17) im ersten Erstreckungsbereich (22) mit einer im Wesentlichen geradlinigen Schnittkonturlinie mit einem Neigungswinkel γ zur radialen Richtung R ausgebildet ist.

2. Fahrzeugluftreifen gemäß den Merkmalen von Anspruch 1,
wobei der Krümmungsradius R₁ mit 1mm ≤ R₁≤ 5mm - insbesondere 2mm ≤ R₁≤ 3mm - ausgebildet ist.

3. Fahrzeugluftreifen gemäß den Merkmalen von Anspruch 1 oder Anspruch 2,
wobei α mit 30° ≤ α ≤ 60° - insbesondere mit 42° ≤ α ≤ 48°- ausgebildet ist.

4. Fahrzeugluftreifen gemäß den Merkmalen von einem oder mehreren der vorangegangenen Ansprüche,
wobei die Schnittkonturlinie auch des ersten Erstreckungsbereichs (24) der axial zur Innenschulter IN des Fahrzeugluftreifens weisenden Rippenflanke (21) von radial innen nach radial außen mit axialer Neigung in Richtung zur Umfangsrippe (3) hin ausgebildet ist und der Neigungswinkel β zur radialen Richtung R mit 0° ≤ β ≤ 5° - insbesondere mit 0° ≤ β ≤ 3° - ausgebildet ist.

5. Fahrzeugluftreifen gemäß den Merkmalen von einem oder mehreren der vorangegangenen Ansprüche,
wobei die Schnittkonturlinie auch des ersten Erstreckungsbereichs (22) der axial zur Außenschulter OU des Fahrzeugluftreifens weisenden Rippenflanke (20) von radial innen nach radial außen mit axialer Neigung in Richtung zur Umfangsrippe (3) hin ausgebildet ist und der Neigungswinkel γ zur radialen Richtung R mit 0° ≤ γ ≤ 5° - insbesondere mit 0° ≤ γ ≤ 3° - ausgebildet ist.

6. Fahrzeugluftreifen gemäß den Merkmalen von einem oder mehreren der vorangegangenen Ansprüche,
wobei an der axial zur Außenschulter OU des Fahrzeugluftreifens weisenden Rippenflanke (20) der erste Erstreckungsbereich (22) die tangentiale Verlängerung zur Krümmungslinie des zweiten Erstreckungsbereiches (23) im Übergangspunkt zwischen erstem (22) und zweitem (23) Erstreckungsbereich bildet.

7. Fahrzeugluftreifen gemäß den Merkmalen von einem oder mehreren der vorangegangenen Ansprüche,
wobei die die Umfangsrippe (3) nach radial außen begrenzende, die Straßenkontaktfläche bildenden Mantelfläche (19) die tangentiale Verlängerung zur Krümmungslinie des zweiten Erstreckungsbereiches (23) der axial zur Außenschulter OU des Fahrzeugluftreifens weisenden Rippenflanke (20) im Übergangspunkt zwischen dem zweitem Erstreckungsbereich (23) und der die Umfangsrippe (3) nach radial außen begrenzenden, die Straßenkontaktfläche bildenden Mantelfläche (19) bildet.

8. Fahrzeugluftreifen gemäß den Merkmalen von einem oder mehreren der vorangegangenen Ansprüche,
wobei der zweite, äußere Erstreckungsbereich (25) der axial zur Innenschulter IN des Fahrzeugluftreifens weisenden Rippenflanke (21) mit einer in radialer Richtung R gemessenen Erstreckungshöhe H₂ ausgebildet ist mit H₂ ≤ (1/3)Pₜᵢ, wobei die Profiltiefe Pₜᵢ das Maß der maximalen radialen Erstreckung der durch die axial zur Innenschulter IN des Fahrzeugluftreifens weisenden Rippenflanke (21) begrenzten Umfangsrille (8) angibt.

9. Fahrzeugluftreifen gemäß den Merkmalen von Anspruch 8,
wobei 1mm ≤ H₂ ≤ 2mm.

10. Fahrzeugluftreifen gemäß den Merkmalen von einem oder mehreren der vorangegangenen Ansprüche,
wobei der zweite, äußere Erstreckungsbereich (23) der axial zur Außenschulter OU des Fahrzeugluftreifens weisenden Rippenflanke (20) mit einer in radialer Richtung R gemessenen Erstreckungshöhe H₄ ausgebildet ist mit H₄ ≤ (1/3)Pₜₐ, wobei die Profiltiefe Pₜₐ das Maß der maximalen radialen Erstreckung der durch die axial zur Außenschulter OU des Fahrzeugluftreifens weisenden Rippenflanke (20) begrenzten Umfangsrille (7) angibt.

## Claims

1. Pneumatic vehicle tyre - in particular for passenger cars - with an asymmetrical tread profile, with an outer shoulder OU, facing the outer side of the vehicle, and with an inner shoulder IN, facing the inner side of the vehicle, and with at least one circumferential rib (3), which is made to extend over the circumference of the pneumatic vehicle tyre and is bounded in the axial direction A of the pneumatic vehicle tyre respectively by a circumferential channel (7, 8), the circumferential rib (3) being bounded radially outwards by a lateral surface (19), forming the road contact surface, and in both axial directions A respectively by a rib flank (20, 21), forming a channel wall of the adjacent circumferential channel (7, 8), the two rib flanks (20, 21) respectively being formed by a first radially inner region of extent (22, 24) and by a second radially outer radial region of extent (23, 25), of which the radially inner, first region of extent (22, 24) is made to extend radially outwards from the channel base (17, 18) up to the second, radially outer region of extent (23, 25) and the second, radially outer region of extent (23, 25) is made to extend radially outwards from the first radially inner region of extent (22, 24) up to the lateral surface (19) that bounds the circumferential rib (3) radially outwards and forms the road contact surface, wherein the rib flank (20) axially facing the outer shoulder OU of the pneumatic vehicle tyre is formed in its sectional planes perpendicular to the direction of longitudinal extent of the circumferential channel (7) bounded by this rib flank (20) in the second region of extent (23) by a sectional contour line that is curved with a radius of curvature R₁ about a centre point of curvature M₁, the centre point of curvature M₁ lying on the side facing from the sectional contour line towards the circumferential rib (3), **characterized in that** the rib flank (21) axially facing the inner shoulder IN of the pneumatic vehicle tyre is formed in its sectional planes perpendicular to the direction of longitudinal extent of the circumferential channel (8) bounded by this rib flank (21) in the first region of extent (24) by a substantially straight sectional contour line with an angle of inclination β to the radial direction R and in the second region of extent (25) by a substantially straight sectional contour line with an angle of inclination α to the radial direction R, the sectional contour line of at least the second region of extent (25) being formed from the inside outwards in the radial sense with an axial inclination in the direction of the circumferential rib (3), with α > β, and **in that** the rib flank (20) axially facing the outer shoulder OU of the pneumatic vehicle tyre is formed in its sectional planes perpendicular to the direction of longitudinal extent of the circumferential channel (7) bounded by this rib flank (20) in the first region of extent (22) by a substantially straight sectional contour line with an angle of inclination γ to the radial direction R.

2. Pneumatic vehicle tyre according to the features of Claim 1, wherein the radius of curvature R₁ is formed with 1 mm ≤ R₁ ≤ 5 mm - in particular 2 mm ≤ R₁ ≤ 3 mm.

3. Pneumatic vehicle tyre according to the features of Claim 1 or 2, wherein α is formed with 30° ≤ α ≤ 60° - in particular with 42° ≤ α ≤ 48°.

4. Pneumatic vehicle tyre according to the features of one or more of the preceding claims, wherein the sectional contour line also of the first region of extent (24) of the rib flank (21) axially facing the inner shoulder IN of the pneumatic vehicle tyre is formed from the inside outwards in the radial sense with an axial inclination in the direction of the circumferential rib (3) and the angle of inclination β to the radial direction R is formed with 0 ° ≤ β ≤ 5 ° - in particular with 0° ≤ β ≤ 3°.

5. Pneumatic vehicle tyre according to the features of one or more of the preceding claims, wherein the sectional contour line also of the first region of extent (22) of the rib flank (20) axially facing the outer shoulder OU of the pneumatic vehicle tyre is formed from the inside outwards in the radial sense with an axial inclination in the direction of the circumferential rib (3) and the angle of inclination γ to the radial direction R is formed with 0° ≤ γ ≤ 5° - in particular with 0° ≤ γ ≤ 3°.

6. Pneumatic vehicle tyre according to the features of one or more of the preceding claims, wherein, at the rib flank (20) axially facing the outer shoulder OU of the pneumatic vehicle tyre, the first region of extent (22) forms the tangential extension with respect to the line of curvature of the second region of extent (23) at the transition point between the first region of extent (22) and the second region of extent (23).

7. Pneumatic vehicle tyre according to the features of one or more of the preceding claims, wherein the lateral surface (19) bounding the circumferential rib (3) radially outwards and forming the road contact surface forms the tangential extension with respect to the line of curvature of the second region of extent (23) of the rib flank (20) axially facing the outer shoulder OU of the pneumatic vehicle tyre at the transition point between the second region of extent (23) and the lateral surface (19) bounding the circumferential rib (3) radially outwards and forming the road contact surface.

8. Pneumatic vehicle tyre according to the features of one or more of the preceding claims, wherein the second, outer region of extent (25) of the rib flank (21) axially facing the inner shoulder IN of the pneumatic vehicle tyre is formed with a height of extent H₂, measured in the radial direction R, with H₂ ≤ (1/3) Pₜᵢ, the profile depth Pₜᵢ indicating the size of the maximum radial extent of the circumferential groove (8) bounded by the rib flank (21) axially facing the inner shoulder IN of the pneumatic vehicle tyre.

9. Pneumatic vehicle tyre according to the features of Claim 8, with 1 mm ≤ H₂ ≤ 2 mm.

10. Pneumatic vehicle tyre according to the features of one or more of the preceding claims, wherein the second, outer region of extent (23) of the rib flank (20) axially facing the outer shoulder OU of the pneumatic vehicle tyre is formed with a height of extent H₄, measured in the radial direction R, with H₄ ≤ (1/3) Pₜₐ, the profile depth Pₜₐ indicating the size of the maximum radial extent of the circumferential groove (7) bounded by the rib flank (20) axially facing the outer shoulder OU of the pneumatic vehicle tyre.

## Revendications

1. Bandage pneumatique pour roue de véhicule, en particulier de voiture automobile, présentant
un profil asymétrique de bande de roulement doté d'un épaulement extérieur OU tourné vers le côté extérieur du véhicule et un épaulement intérieur IN tourné vers le côté intérieur du véhicule et
au moins une nervure périphérique (3) qui s'étend sur toute la périphérie du bandage pneumatique pour roue de véhicule et qui est délimitée dans la direction axiale A du bandage pneumatique pour roue de véhicule par deux rainures périphériques (7, 8),
la nervure périphérique (3) étant délimitée radialement vers l'extérieur par une surface d'enveloppe (19) qui forme la surface de contact avec la chaussée et dans chacune des deux directions axiales A par un flanc (20, 21) de nervure qui forme la paroi de la rainure périphérique (7, 8) adjacente,
chacun des deux flancs (20, 21) de nervure étant configuré avec une première plage d'extension radiale intérieure (22, 24) et une deuxième plage d'extension radiale extérieure (23, 25), la première plage d'extension radiale intérieure (22, 24) s'étendant radialement vers l'extérieur depuis le fond (17, 18) de la rainure, jusqu'à la deuxième plage radiale extérieure d'extension (23, 25) et la deuxième plage d'extension radiale extérieure (23, 25) s'étendant radialement vers l'extérieur depuis la première plage d'extension radiale intérieure (22, 24) jusqu'à la surface d'enveloppe (19) qui délimite la nervure périphérique (3) radialement vers l'extérieur et qui forme la surface de contact avec la chaussée,
le flanc (20) de la nervure tourné axialement vers l'épaulement extérieur OU du bandage pneumatique pour roue de véhicule formant dans son plan de coupe perpendiculaire à la direction d'extension longitudinale de la rainure périphérique (7) délimitée par ce flanc (20) de la nervure dans la deuxième plage d'extension (23) une ligne de contour de coupe incurvée d'un rayon de courbure R₁ autour d'un centre de courbure M₁, le centre de courbure M₁ étant situé sur le côté de la ligne de contour de coupe tourné vers la nervure périphérique (3),
**caractérisé en ce que**
le flanc (21) de la nervure tourné axialement vers l'épaulement intérieur IN du bandage pneumatique pour roue de véhicule forme dans son plan de coupe perpendiculaire à la direction d'extension longitudinale de la rainure périphérique (8) délimitée par ce flanc (21) de la nervure une ligne essentiellement rectiligne de contour de coupe qui présente un angle d'inclinaison β par rapport à la direction radiale R dans la première plage d'extension (24) et une ligne de contour de coupe essentiellement rectiligne présentant un angle d'inclinaison α par rapport à la direction radiale R dans la deuxième plage d'extension (25), la ligne de contour de coupe d'au moins la deuxième plage d'extension (25) vérifiant la relation α > β entre une position radialement intérieure et une position radialement extérieure avec une inclinaison axiale en direction de la nervure périphérique (3) et
**en ce que** le flanc (20) de la nervure tourné axialement vers l'épaulement extérieur OU du bandage pneumatique pour roue de véhicule forme dans son plan de coupe perpendiculaire à la direction d'extension longitudinale de la rainure périphérique (7) délimitée par ce flanc (20) de la nervure une ligne de contour de coupe essentiellement rectiligne présentant un angle d'inclinaison γ par rapport à la direction radiale R dans la première plage d'extension (22).

2. Bandage pneumatique pour roue de véhicule selon les caractéristiques de la revendication 1, dans lequel le rayon de courbure R₁ vérifie la relation 1 mm ≤ R₁ ≤ 5 mm et en particulier 2 mm ≤ R₁ ≤ 3 mm.

3. Bandage pneumatique pour roue de véhicule selon les caractéristiques de la revendication 1 ou de la revendication 2, dans lequel α vérifie la relation 30° ≤ α 60° et en particulier 42° ≤ α ≤ 48°.

4. Bandage pneumatique pour roue de véhicule selon les caractéristiques d'une ou plusieurs des revendications précédentes, dans lequel la ligne de contour de coupe de la première plage d'extension (24) du flanc (21) de la nervure tourné axialement vers l'épaulement intérieur IN du bandage pneumatique pour roue de véhicule forme également entre une position radialement intérieure et une position radialement extérieure une inclinaison axiale en direction de la nervure périphérique (3), l'angle d'inclinaison β par rapport à la direction radiale R vérifiant la relation 0° ≤ β ≤ 5° et en particulier 0° ≤ β ≤ 3°.

5. Bandage pneumatique pour roue de véhicule selon les caractéristiques d'une ou plusieurs des revendications précédentes, dans lequel la ligne de contour de coupe de la première plage d'extension (22) du flanc (20) de la nervure tourné axialement vers l'épaulement extérieur OU du bandage pneumatique pour roue de véhicule forme également entre une position radialement intérieure et une position radialement extérieure une inclinaison axiale en direction de la nervure périphérique (3), l'angle d'inclinaison γ par rapport à la direction radiale R vérifiant la relation 0° ≤ γ ≤ 5° et en particulier 0° ≤ γ ≤ 3°.

6. Bandage pneumatique pour roue de véhicule selon les caractéristiques d'une ou plusieurs des revendications précédentes, dans lequel sur le flanc (20) de la nervure, la première plage d'extension (22) tournée axialement vers l'épaulement extérieur OU du bandage pneumatique pour roue de véhicule forme le prolongement tangentiel à la ligne de courbure de la deuxième plage d'extension (23) au point de transition entre la première plage d'extension (22) et la deuxième plage d'extension (23).

7. Bandage pneumatique pour roue de véhicule selon les caractéristiques d'une ou plusieurs des revendications précédentes, dans lequel la surface d'enveloppe (19) qui délimite radialement vers l'extérieur la nervure périphérique (3) et qui forme la surface de contact avec la chaussée forme le prolongement tangentiel à la ligne de courbure de la deuxième plage d'extension (23) du flanc (20) de la nervure tourné axialement vers l'épaulement extérieur OU du bandage pneumatique pour roue de véhicule au point de transition entre la deuxième plage d'extension (23) et la surface d'enveloppe (19) qui délimite la nervure périphérique (3) radialement vers l'extérieur et qui forme la surface de contact avec la chaussée.

8. Bandage pneumatique pour roue de véhicule selon les caractéristiques d'une ou plusieurs des revendications précédentes, dans lequel la deuxième plage d'extension (25) extérieure du flanc (21) de la nervure tourné axialement vers l'épaulement intérieur IN du bandage pneumatique pour roue de véhicule présente une hauteur d'extension H₂, mesurée dans la direction radiale R, qui vérifie la relation H₂ ≤ (1/3) Pₜᵢ, la profondeur Pₜᵢ du profil donnant la valeur de l'extension radiale maximale de la rainure périphérique (8) délimitée par le flanc (21) de la nervure tourné axialement vers l'épaulement intérieur IN du bandage pneumatique pour roue de véhicule.

9. Bandage pneumatique pour roue de véhicule selon les caractéristiques de la revendication 8, dans lequel 1 mm ≤ H₂ ≤ 2 mm.

10. Bandage pneumatique pour roue de véhicule selon les caractéristiques d'une ou plusieurs des revendications précédentes, dans lequel la deuxième plage d'extension (23) extérieure du flanc (20) de la nervure tourné axialement vers l'épaulement extérieur OU du bandage pneumatique pour roue de véhicule présente une hauteur d'extension H₄, mesurée dans la direction radiale R, qui vérifie la relation H₄ ≤ (1/3) Pₜₐ, la profondeur Pₜₐ du profil donnant la valeur de l'extension radiale maximale de la rainure périphérique (7) délimitée par le flanc (20) de la nervure tourné axialement vers l'épaulement extérieur OU du bandage pneumatique pour roue de véhicule.
